# EUROPEAN PATENT APPLICATION

(11) **EP 4 443 953 A1**
(43) Date of publication of application: **09.10.2024**
(21) Application number: 22900604.4
(22) Date of filing: 01.12.2022
(51) Int. Cl.: H04W 28/02

(54) **INFORMATION TRANSMISSION METHOD AND APPARATUS, AND TERMINAL AND NETWORK SIDE DEVICE**

(30) Priority: 03.12.2021 CN 202111511306
(71) Applicant: Vivo Mobile Communication Co., Ltd., Dongguan, Guangdong 523863 (CN)
(72) Inventor: LIU, Jinhua, Dongguan, Guangdong 523863 (CN)
(74) Representative: Conti, Marco
(86) International application number: PCT/CN2022/135869
(87) International publication number: WO 2023/098800

(57) **Abstract**

This application discloses an information transmission method and apparatus, a terminal, and a network side device, and belongs to the field of communication technologies. The information transmission method of embodiments of this application includes: a terminal obtains transmission parameter information (301), where the transmission parameter information is used to determine an air interface transmission parameter of video service data; and the terminal transmits the transmission parameter information to a network side device (302).

## Description

### CROSS-REFERENCE TO RELATED APPLICATION

This application claims priority to Chinese Patent Application 202111511306.X filed on December 03, 2021, which is incorporated herein by reference in its entirety.

### TECHNICAL FIELD

This application relates to the field of communication technologies, and in particular, to an information transmission method and apparatus, and a terminal and a network side device.

### BACKGROUND

For a service with a delay requirement, for example, an extended reality (eXtended Reality, XR) service, the XR service has periodic picture frame arrivals. For a group of picture (group of picture, GoP)-based picture frame data transmission model, there are I frames, P frames, and B frames. Data volume of the I frames is maximum, data volume of the P frames is the second, and data volume of the B frames is minimum. The I frames appear periodically, and there are a plurality of P frames and B frames between two I frames.

If there are a plurality of users that transmit the XR service in one cell, the XR service is based on a GoP model, and if occurrence times of the I frames of the XR service of the plurality of users are close, a large radio capacity is required to transmit these I frames, which may lead to network congestion. If the network congestion is relieved, there is a significant surplus of radio capacity, which may lead to a waste of radio resources. That is to say, utilization of the radio capacity is not effective enough, and transmission performance is affected.

### SUMMARY

Embodiments of this application provide an information transmission method and apparatus, a terminal, and a network side device, which can solve the problems that utilization of radio capacity is not effective enough, and transmission performance is affected in related technologies.

According to a first aspect, an information transmission method is provided, including:
a terminal obtains transmission parameter information, where the transmission parameter information is used to determine an air interface transmission parameter of video service data; and
the terminal transmits the transmission parameter information to a network side device.

According to a second aspect, an information transmission method is provided, including:
a network side device receives transmission parameter information transmitted by a terminal, where the transmission parameter information is used to determine an air interface transmission parameter of video service data;
the network side device determines the air interface transmission parameter according to the transmission parameter information; and
the network side device transmits the video service data based on the air interface transmission parameter.

According to a third aspect, an information transmission apparatus is provided, including:
an obtaining module, configured to obtain transmission parameter information, where the transmission parameter information is used to determine an air interface transmission parameter of video service data; and
a transmission module, configured to transmit the transmission parameter information to a network side device.

According to a fourth aspect, an information transmission apparatus is provided, including:
a transmission module, configured to receive transmission parameter information transmitted by a terminal, where the transmission parameter information is used to determine an air interface transmission parameter of video service data; and
a determination module, configured to determine the air interface transmission parameter according to the transmission parameter information.

The transmission module is further configured to transmit the video service data based on the air interface transmission parameter.

According to a fifth aspect, a terminal is provided. The terminal includes a processor and a memory. The memory stores a program or instructions executable by the processor. The program or the instructions implement steps of the information transmission method according to the first aspect when executed by the processor.

According to a sixth aspect, a terminal is provided. The terminal includes a processor and a communication interface. The processor or the communication interface is configured to obtain transmission parameter information. The transmission parameter information is used to determine an air interface transmission parameter of video service data. The communication interface is further configured to transmit the transmission parameter information to a network side device.

According to a seventh aspect, a network side device is provided. The network side device includes a processor and a memory. The memory store a program or instructions executable by the processor. The program or the instructions implement steps of the method according to the second aspect when executed by the processor.

According to an eighth aspect, a network side device is provided, including a processor and a communication interface. The communication interface is configured to: receive transmission parameter information transmitted by a terminal, where the transmission parameter information is used to determine an air interface transmission parameter of video service data, and transmit the video service data based on the air interface transmission parameter. The processor is configured to determine the air interface transmission parameter according to the transmission parameter information.

According to a ninth aspect, a communication system is provided, including: a terminal and a network side device. The terminal may be configured to perform steps of the information transmission method according to the first aspect; and the network side device may be configured to perform steps of the information transmission method according to the second aspect.

According to a tenth aspect, a readable storage medium is provided. The readable storage medium stores a program or instructions. The program or the instructions implement steps of the method according to the first aspect or the second aspect when executed by the processor.

According to an eleventh aspect, a chip is provided. The chip includes a processor and a communication interface. The communication interface is coupled to the processor. The processor is configured to run a program or instructions to implement steps of the method according to the first aspect or the second aspect.

According to a twelfth aspect, a computer program product is provided. The computer program product is stored in a storage medium. The computer program product is executed by at least one processor to implement steps of the information transmission method according to the first aspect or the second aspect.

According to a thirteenth aspect, a communication device is provided, which is configured to perform the information transmission method according to the first aspect or the second aspect.

In embodiments of this application, a terminal obtains transmission parameter information, where the transmission parameter information is used to determine air interface transmission parameter of video service data; and the terminal transmits the transmission parameter information to a network side device. The network side device may determine the air interface transmission parameter according to the transmission parameter information transmitted by the terminal, so that the air interface transmission parameter may satisfy a demand for transmitting the video service data by the terminal, thereby improving performance of transmitting the video service data.

### BRIEF DESCRIPTION OF THE DRAWINGS

FIG. 1 is a structural diagram of a network system according to an embodiment of this application;
FIG. 2a is a schematic structural diagram of a network for transmitting XR service data between a terminal and a content server;
FIG. 2b is a schematic structural diagram of a network for transmitting XR service data between two terminals;
FIG. 3 is a first flowchart of an information transmission method according to an embodiment of this application;
FIG. 4 is a structural diagram of a modem, an application layer, and an adaptation layer of a terminal according to an embodiment of this application;
FIG. 5 is a second flowchart of an information transmission method according to an embodiment of this application;
FIG. 6 is a third flowchart of an information transmission method according to an embodiment of this application;
FIG. 7 is a schematic diagram of congestion of a cell;
FIG. 8 is a schematic diagram of triggering and relieving network congestion according to an embodiment of this application;
FIG. 9 is a structural diagram of a first information transmission apparatus according to an embodiment of this application;
FIG. 10 is a structural diagram of a second information transmission apparatus according to an embodiment of this application;
FIG. 11 is a structural diagram of a communication device according to an embodiment of this application;
FIG. 12 is a structural diagram of a terminal according to an embodiment of this application; and
FIG. 13 is a structural diagram of a network side device according to an embodiment of this application.

### DETAILED DESCRIPTION

Technical solutions in embodiments of this application are clearly described below with reference to accompanying drawings in embodiments of this application. Apparently, the described embodiments are part rather than all embodiments of this application. All other embodiments obtained by those of ordinary skill in the art based on the embodiments of this application fall within the scope of protection of this application.

Terms "first", "second", and the like in the specification and the claims of this application are used to distinguish similar objects instead of describing a specific order or sequence. It is to be understood that the terms used in this way are exchangeable in a proper case, so that the embodiments of this application can be implemented in a sequence other than sequences graphically shown or described here, and objects distinguished by "first" and "second" are usually of the same class without limiting a number of the objects, for example, a first object may be one or may be multiple. In addition, "and/or" in the specification and the claims represents at least one of the connected objects, and character "/" generally represents that contextual objects are in an "or" relationship.

It is worth noting that technologies described in embodiments of this application are not limited to a long term evolution (Long Term Evolution, LTE)/evolution (LTE-Advanced, LTE-A) system of the LTE, or may be used for other wireless communication systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, and a single-carrier frequency division multiple access (Single-carrier Frequency Division Multiple Access, SC-FDMA), and other systems. Terms "system" and "network" in the embodiments of this application are often used interchangeably. The described technology can not only be used in the systems and radio technologies mentioned above, but also be used in other systems and radio technologies. The following description describes a new radio (New Radio, NR) system for a purpose of giving examples, and the term NR is used in most of the following descriptions. However, these technologies can also be applied to applications other than an NR system application, for example, a 6th generation (6th Generation, 6G) communication system.

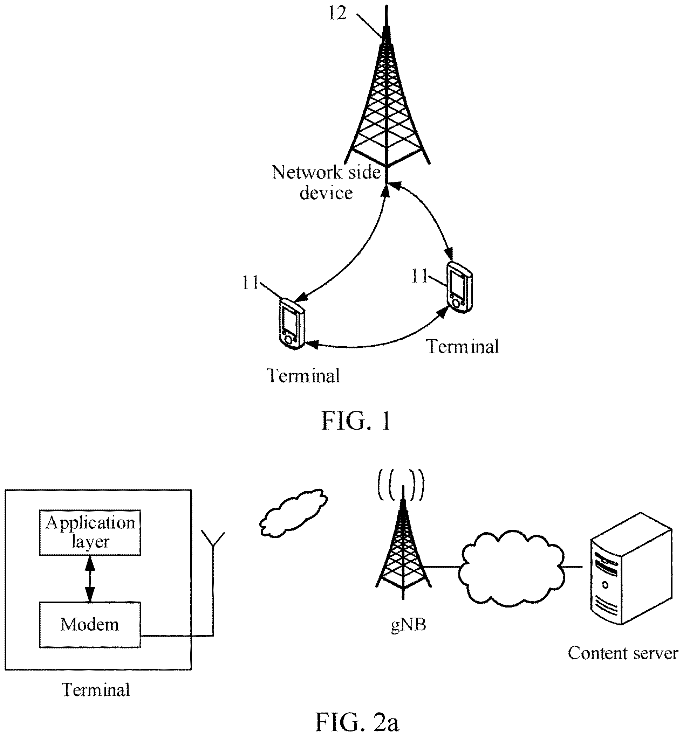

FIG. 1 is a block diagram of a wireless communication system to which the embodiments of this application are applicable. The wireless communication system includes a terminal 11 and a network side device 12. The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palm computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), a smart home device (a home device with a wireless communication function, such as a refrigerator, a television, a washing machine, or furniture), a game console, a personal computer (personal computer, PC), an automatic teller machine, or a self-service machine. The wearable device includes: a smart watch, a smart wristband, smart headphones, smart glasses, smart jewelry (a smart bracelet, a smart chain bracelet, a smart ring, a smart necklace, a smart anklet, a smart ankle chain, and the like), a smart wrist strap, smart clothing, and the like. It is to be noted that, there is no limitation to a specific type of the terminal 11 in the embodiments of this application. The network side device 12 may include an access network device or a core network device. The access network device 12 may also be referred to as a wireless access network device, a radio access network (Radio Access Network, RAN), a wireless access network function, or a wireless access network unit. The access network device 12 may include a base station, a wireless local area network (Wireless Local Area Network, WLAN) access point or a WiFi node, and the like. The base station may be referred to as a NodeB, an evolved NodeB (Evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home node B, a home eNB, a transmitting receiving point (Transmitting Receiving Point, TRP), or a suitable term in the field. As long as achieving the same technical effect, the base station is not limited to a specific technical word. It is to be noted that, in this embodiment of this application, an introduction is made by only taking the base station in the NR system as an example, and there is not limitation to a specific type of the base station.

To facilitate better understanding of embodiments of this application, related content of an extended reality (eXtended Reality, XR) service is briefly introduced as follows:
the XR service includes an augmented reality (Augmented Reality, AR) service, a virtual reality (Virtual Reality, VR) service, and a mixed AR and VR (Mixed AR and VR, MR) service. The XR service may implement picture data compression by using an H.264 coding technology to achieve purposes of saving traffic and ensuring picture quality. The H.264 coding technology can code picture data into three types of picture frames:
an intra-coded picture (Intra-coded picture, I) frame, which is a complete picture frame and may generate or present a picture without relying on other frames;
a predicted picture (Predicted picture, P) frame, which only contains picture change information relative to a previous frame, where a receiver needs to generate a current frame by combining the previous frame and completes display on a receiving terminal; and
a bidirectional predicted picture (Bidirectional predicted picture, B) frame that indicates change information of a current frame relative to a previous frame and a subsequent frame, where a receiver needs to generate the current frame by combining the previous frame and the subsequent frame.

The previous frame and the subsequent frame mentioned above are sorted according to a frame presentation time or a picture collection time of an information source end. Actual transmitting and receiving time may be adjusted according to a picture decoding time of the receiver, for example, a transmitter may transmit according to a picture frame decoding time sequence of the receiver.

Different frame types correspond to different frame coding methods, which leads to different degrees of picture compression. The degree of compression of the I frame is relatively low (that is, the frame data volume is maximum), the degree of compression of the P frame is moderate (that is, the frame data volume is moderate), and the degree of compression of the B frame is the highest (that is, the frame data volume is maximum).

An XR picture has two transmission methods, that is, a frame slice combination-based transmission method and a group of picture (group of picture, GoP)-based transmission method.

The frame slice combination-based transmission method: One picture frame is cut into a plurality of data blocks, then blocks of a plurality of picture frames are dispersedly combined into a plurality of data blocks for transmitting to achieve a purpose of smooth traffic of an XR service data flow. This method significantly reduces traffic fluctuations caused by differences in data volume among the I frame, the P frame, and the B frame. However, a transmission delay of the picture frames is increased due to cross transmission between the picture frames.

The GoP-based transmission method: A video is divided into a video frame combination based on a period of I frames according to a periodic characteristic of a video stream. All P frames and B frames between an I frame and a next adjacent I frame form a frame combination. The picture frame is transmitted according to a frame period and is played at a receiver. A time interval between time of arrivals of adjacent picture frames is one frame period. Mixed transmission between the picture frames is avoided by the GoP-based transmission method, so that a generated picture frame is transmitted in time. Frame data rate fluctuations are caused due to different degrees of compression among the I frame, the P frame, and the B frame.

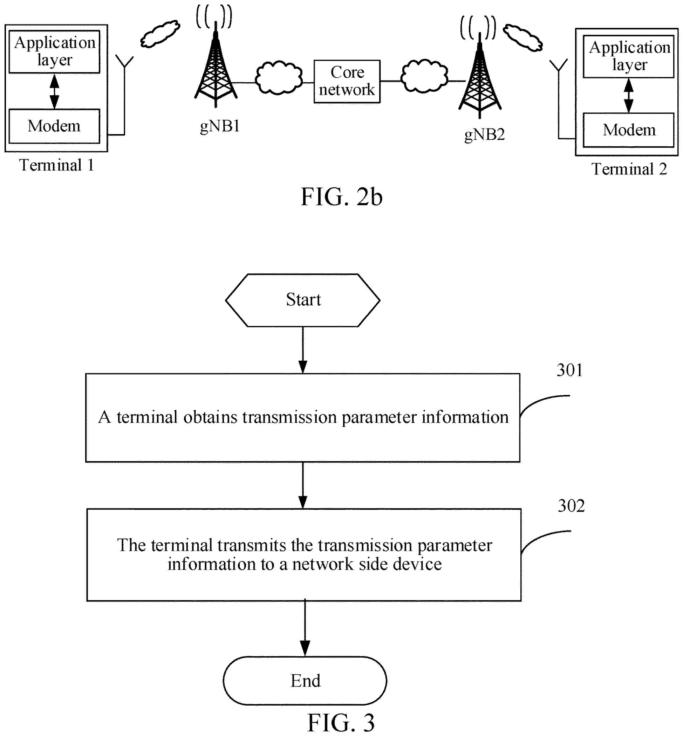

The XR service data is transmitted in an NR network, as shown in FIG. 2a and FIG. 2b, which show data transmission of the XR service data in a wireless network. FIG. 2a shows that a terminal obtains the XR service data from a content server through the wireless network by means of a modem (modem) of the terminal. FIG. 2b shows XR service data transmission between two terminals. The modem of the terminal and a base station run a wireless transmission protocol to complete the XR service data transmission.

The information transmission method provided in embodiments of this application is described in detail below through some embodiments and application scenarios thereof with reference to accompanying drawings.

Refer to FIG. 3, which is a flowchart of an information transmission method according to an embodiment of this application. The information transmission method includes the following steps:

Step 301: A terminal obtains transmission parameter information. The transmission parameter information is used to determine an air interface transmission parameter of video service data.

The transmission parameter information may be independently generated by the terminal, for example, in a case that a video service data transmission rate is low, or may be generated by the terminal based on a first rate adjustment request transmitted by a network side device. In a peer-to-peer scenario, the transmission parameter information may alternatively be transmitted by a transmitting end to the terminal. The transmitting end is an end that performs peer-to-peer transmission on the video service data with the terminal. The transmitting end may be another terminal or server. The video service data may be XR service data.

Step 302: The terminal transmits the transmission parameter information to the network side device.

After receiving the transmission parameter information, the network side device may determine the air interface transmission parameter, for example, a time-frequency resource configuration and a transmission delay configuration, according to the transmission parameter information, and transmit the air interface transmission parameter to the terminal. The terminal receives the air interface transmission parameter.

In this embodiment, the terminal obtains the transmission parameter information. The transmission parameter information is used to determine the air interface transmission parameter of the video service data. The terminal transmits the transmission parameter information to the network side device. The network side device may determine the air interface transmission parameter according to the transmission parameter information transmitted by the terminal, so that the air interface transmission parameter may satisfy a demand for transmitting the video service data by the terminal, thereby improving performance of transmitting the video service data. For example, the network side device may adjust the air interface transmission parameter to avoid network congestion when the terminal needs a large radio capacity to transmit the video service data. The network side device may adjust the air interface transmission parameter to improve the utilization rate of radio resources when the network congestion is relieved.

The above-mentioned transmission parameter information includes at least one of the following:
a transmission rate of the video service data;
a quantity of picture frames per second in the video service data, that is, an picture frame rate;
a quantity of picture frames in a GoP;
a template of an picture frame, that is, time and location information of occurrence of an I frame, a P frame, and a B frame in each I frame period;
a data volume range of the I frame, for example, maximum data volume of the I frame;
a data volume range of the P frame, for example, maximum data volume of the P frame; or
a data volume range of the B frame, for example, maximum data volume of the P frame.

The network side device determines a radio resource allocation (that is, the air interface transmission parameter) according to the transmission parameter information after the receiving the transmission parameter information. The radio resource allocation includes a dynamically scheduled uplink resource allocation, a dynamically scheduled downlink resource allocation, a pre-configuration-based downlink resource allocation, a pre-configuration-based uplink resource allocation, a parameter configuration for discontinuous resource reception, an uplink scheduling request resource configuration, a configuration of channel quality reporting, and the like.

In an embodiment of this application, before the terminal obtains the transmission parameter information, the method further includes the following step:
the terminal receives a first rate adjustment request transmitted by the network side device, where the first rate adjustment request is used to request the terminal to adjust a transmission parameter of the video service data.

The step that the terminal obtains the transmission parameter information includes the following step:
the terminal obtains the transmission parameter information based on the first rate adjustment request.

In this embodiment, the terminal obtains the transmission parameter information based on the first rate adjustment request transmitted by the network side device. The network side device may transmit the first rate adjustment request in a case that network congestion occurs or network congestion is relieved.

Specifically, the terminal may include a modem and an application layer (which may alternatively be referred to as an XR application layer). The terminal receives the first rate adjustment request through the modem of the terminal. The modem cannot directly transmit the received first rate adjustment request to the application layer due to different transmission rules and syntax of information. Instead, a second rate adjustment request needs to be generated according to the first rate adjustment request first, and then the second rate adjustment request is transmitted to the application layer of the terminal. The application layer determines the transmission parameter information based on the second rate adjustment request. Further, the transmission parameter information is transmitted to the network side device through the modem.

The terminal further includes an adaptation layer located between the application layer and the modem. The adaptation layer is configured to convert the second rate adjustment request transmitted by the modem into a format that can be parsed by the application layer, and/or, convert the transmission parameter information transmitted by the application layer into a format that can be parsed by the modem.

The modem of the terminal transmits parameter information that is carried in the first rate adjustment request and is related to video service data transmission to the application layer. The application layer of the terminal determines a new video service transmission parameter according to the parameter information related to the video service data transmission. The parameter information related to the video service data transmission includes one or more of an indication of an increase or a decrease in the video service data rate, a target data rate or an acceptable highest rate of the video service data, a quantity of picture frames per second, an expected adjustment amount of a transmission rate of the video service data, and a reason for triggering a rate adjustment request.

The adaptation layer may be located in an operating system of the terminal, or located between the modem of the terminal and the application layer of the terminal. The terminal may further include: an application control layer. The application control layer is configured to convert information transmitted by the modem of the terminal into a format that can be parsed by the application layer of the terminal, and/or, convert information transmitted by the application layer of the terminal into a format that can be parsed by the modem of the terminal. Further, the modem of the terminal includes a radio resource control (Radio Resource Control, RRC) layer. The application control layer is located between the RRC layer and the adaptation layer.

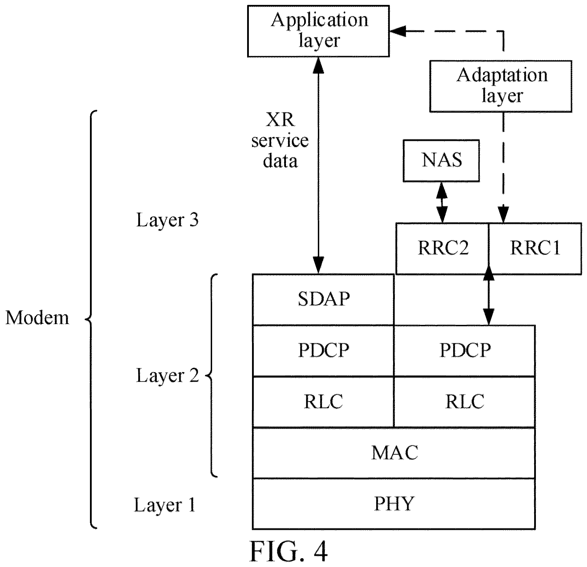

FIG. 4 shows a structural relationship diagram among a modem, an application layer, and an adaptation layer of the terminal. As shown in FIG. 4, a radio resource control (Radio Resource Control, RRC) layer (referred to as a radio protocol layer hereinafter) of a modem of a terminal cannot perform information interaction with an upper application layer based on an existing protocol, an adaptation layer (adaptation layer) may be added between the radio resource control layer and the upper application layer, and the adaptation layer may be located in an operating system of the terminal, or serve as a sublayer of the application layer or the radio protocol layer. A function of the adaptation layer is to convert request information that is transmitted by the RRC layer to the application layer and is used to request time of arrival advance information or a configuration message into a format that can be parsed by the application layer, and explain the time of arrival advance information transmitted by the application layer to the RRC layer into a format that can be parsed by the RRC layer. Optionally, the adaptation layer provides some functions for the application layer and the RRC layer to access. The application layer calls these functions to obtain the request information or the configuration message from the RRC layer, or transmits the time of arrival advance information of a picture frame to the RRC layer. The RRC layer calls some functions to transmit the request information or the configuration message to the application layer, or obtains the time of arrival advance information of the picture frame from the application layer.

FIG. 4 shows an example of a protocol layer structure of the terminal containing the adaptation layer. The RRC layer is configured to process interaction with the application layer. In addition, another application (Application, APP) control (Control) layer may alternatively be introduced above the RRC layer. The application control layer serves as a sublayer of layer 3, and is configured to process interaction with the application layer.

In FIG. 4, layer 1 includes a physical (Physical, PHY) layer, layer 2 includes a radio link control (Radio Link Control, RLC) protocol, a packet data convergence protocol (Packet Data Convergence Protocol, PDCP), and a service data adaption protocol (Service Data Adaption Protocol, SDAP), and layer 3 includes an RRC1, an RRC2, and a non-access stratum (Non-Access Stratum, NAS), and an adaptation layer.

The above-mentioned first rate adjustment request includes at least one of the following:
a target data rate or an acceptable highest rate of the video service data, where the target data rate is an intentional data rate indicated by the network side device;
a quantity of picture frames per second;
an expected adjustment amount of a transmission rate of the video service data; or
a reason for triggering the first rate adjustment request.

The first rate adjustment request may be transmitted by the network side device to the terminal in a case that network congestion occurs or network congestion is relieved. The first rate adjustment request includes at least one of the following:
a video rate decrease request, for example, the video rate decrease request in a case that the network congestion occurs, which may be understood as that the first rate adjustment request includes the video rate decrease request in a case that the network congestion occurs; or
a video rate increase request, for example, the video rate increase request in a case that the network congestion is relieved, which may be understood as that the first rate adjustment request includes the video rate increase request in a case that the network congestion is relieved.

In a case that the network congestion occurs, the first rate adjustment request includes the video rate decrease request to decrease video service data volume transmitted by the terminal to alleviate and relieve the network congestion. In a case that the network congestion is relieved, the first rate adjustment request includes the video rate increase request to increase video service data volume transmitted by the terminal to improve the utilization rate of radio resources.

Similarly, the second rate adjustment request includes at least one of the following:
a target data rate or an acceptable highest rate of the video service data;
a quantity of picture frames per second;
an expected adjustment amount of a transmission rate of the video service data; or
a reason for triggering the second rate adjustment request.

The second rate adjustment request includes at least one of the following:
a video rate decrease request, for example, the video rate decrease request in a case that the network congestion occurs; or
a video rate increase request, for example, the video rate increase request in a case that the network congestion is relieved.

In an embodiment of this application, before the terminal receives the first rate adjustment request transmitted by the network side device, the method further includes the following step:
the terminal transmits first information. The first information indicates information about a rate at which the terminal transmits the video service data. The first information includes at least one of the following:
(1) an adjustment range of the rate at which the terminal transmits the video service data;
(2) step rate information supported by transmission of the video service data by the terminal, the step rate information including a plurality of rates; or
(3) a preferred rate at which the terminal transmits the video service data, where the terminal may report a rate threshold, a rate that reaches or exceeds the rate threshold is the preferred rate.

Specifically, the terminal transmits the first information to the network side device for the network side device to select when there is a requirement for rate adjustment, for example, when the network side device transmits the first rate adjustment request to the terminal.

For example, the step rate information includes a plurality of rates. The plurality of rates may be rates [DRO, DR1, ..., DRd, ..., and DRN-1] sorted in ascending order. DR0 and DRN-1 are respectively acceptable lowest rate and highest rate, and DRd is an expected rate (which may alternatively be referred to as an intentional rate).

The network side device selects a rate from the rate information when generating the first rate adjustment request after receiving the step rate information of the terminal, and notifies the terminal in the first rate adjustment request, for example, indicating a serial number of a selected step rate in the first rate adjustment request. The network side device may determine the rate in the first rate adjustment request based on rate related information in the first information transmitted by the terminal, for example, the target data rate or the acceptable highest rate.

In an embodiment of this application, in a case that the terminal is a video service data receiving end, the transmission parameter information is obtained by the terminal from a video service data transmitting end. In a case that the terminal is a video service data transmitting end, the transmission parameter information is determined by the terminal.

In a case that the terminal is the video service data receiving end, the transmitting end may independently transmit the transmission parameter information. This may be understood as that the transmitting end does not need to transmit the transmission parameter information based on an information triggering transmitted by the terminal. The transmitting end may alternatively transmit the transmission parameter information based on a third rate adjustment request transmitted by the terminal, that is, in a case that the terminal is the video service data receiving end, before the terminal obtains the transmission parameter information, the method further includes the following step:
the terminal transmits the third rate adjustment request to the video service data transmitting end. The third rate adjustment request is used to request the video service data transmitting end to adjust the transmission parameter of the video service data.

Specifically, in a peer-to-peer scenario, in a case that the terminal is a receiving end (that is, the video service data receiving end), the transmitting end may independently transmit the transmission parameter information in a case that the video service data is transmitted between the terminal and the transmitting end, and the transmitting end may alternatively transmit the transmission parameter information based on the third rate adjustment request transmitted by the terminal. The terminal transmits the transmission parameter information to the network side device after receiving the transmission parameter information, and receives an air interface transmission parameter determined by the network side device based on the transmission parameter information.

Taking peer-to-peer transmission between a first terminal and a transmitting end as an example, for an uplink XR service, the application layer of the first terminal is an XR service data transmitting end, may independently determine the transmission parameter information, and notify the transmission parameter information to a peer receiver (peer receiver) of the application layer of the transmitting end.

For a downlink XR service, the application layer of the first terminal is an XR service data receiving end. The application layer of the first terminal transmits a rate adjustment request (an explicit request) or information for controlling congestion relieving (an implicit request) to the XR service data transmitting end through signaling of the application layer. The transmitting end generates transmission parameter information after receiving the request and transmits the transmission parameter information to the application layer of the first terminal. The application layer of the first terminal transmits the transmission parameter information to a base station.

The above-mentioned third rate adjustment request includes at least one of the following:
a target data rate or an acceptable highest rate of the video service data;
a quantity of picture frames per second;
an expected adjustment amount of a transmission rate of the video service data; or
a reason for triggering the third rate adjustment request.

The third rate adjustment request includes at least one of the following:
a video rate decrease request in a case that network congestion occurs; or
a video rate increase request in a case that network congestion is relieved.

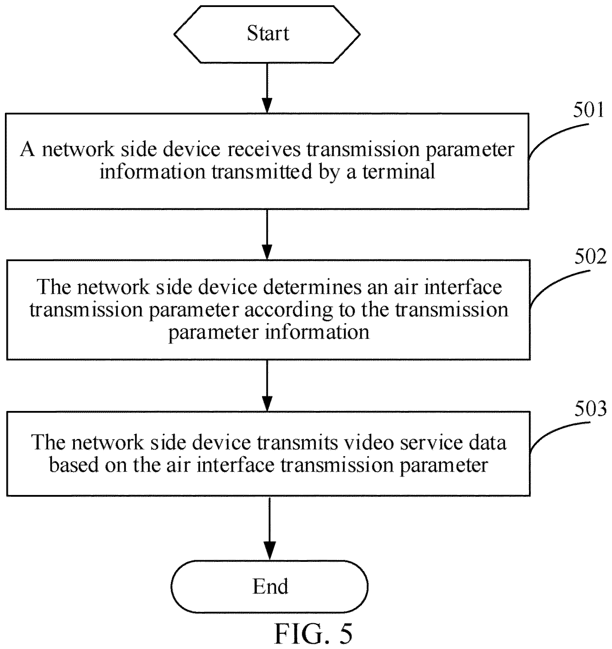

Refer to FIG. 5, which is a flowchart of an information transmission method according to an embodiment of this application. The information transmission method includes the following steps:
Step 501: A network side device receives transmission parameter information transmitted by the terminal. The transmission parameter information is used to determine an air interface transmission parameter of video service data.

The video service data may be XR service data, and the network side device may be a base station.

Step 502: The network side device determines an air interface transmission parameter according to the transmission parameter information.

After receiving the transmission parameter information, the network side device may determine the air interface transmission parameter, for example, a time-frequency resource configuration and a transmission delay configuration, according to the transmission parameter information. Specifically, the air interface transmission parameter further includes a dynamically scheduled uplink resource allocation, a dynamically scheduled downlink resource allocation, a pre-configuration-based downlink resource allocation, a pre-configuration-based uplink resource allocation, a parameter configuration for discontinuous resource reception, an uplink scheduling request resource configuration, a configuration of channel quality reporting, and the like.

Step 503: The network side device transmits the video service data based on the air interface transmission parameter.

In this embodiment, the network side device receives the transmission parameter information transmitted by the terminal. The transmission parameter information is used to determine the air interface transmission parameter of the video service data. The network side device determines the air interface transmission parameter according to the transmission parameter information. The network side device transmits the video service data based on the air interface transmission parameter. The network side device determines the air interface transmission parameter according to the transmission parameter information transmitted by the terminal, so that the air interface transmission parameter may satisfy a demand for transmitting the video service data by the terminal, thereby improving performance of transmitting the video service data.

The above-mentioned transmission parameter information includes at least one of the following:
a transmission rate of the video service data;
a quantity of picture frames per second in the video service data, that is, an picture frame rate;
a quantity of picture frames in a GoP;
a template of an picture frame, that is, time and location information of occurrence of an I frame, a P frame, and a B frame in each I frame period;
a data volume range of the I frame, for example, maximum data volume of the I frame;
a data volume range of the P frame, for example, maximum data volume of the P frame; or
a data volume range of the B frame, for example, maximum data volume of the P frame.

In an embodiment of this application, the terminal may transmit the transmission parameter information based on the first rate adjustment request transmitted by the network side device, that is, before the network side device receives the transmission parameter information transmitted by the terminal, the method further includes the following step:
the network side device transmits the first rate adjustment request to the terminal. The first rate adjustment request is used to request the terminal to adjust a transmission parameter of the video service data.

The above-mentioned first rate adjustment request includes at least one of the following:
a video rate decrease request in a case that network congestion occurs; or
a video rate increase request in a case that network congestion is relieved.

Taking an example in which the network side device is a base station for describing, the base station may transmit the first rate adjustment request to the terminal under the following conditions:
(1) when congestion occurs, XR service data rates of part users need to be decreased, so that the base station can continue provide a service of an XR service for these users effectively; or
(2) a system is in a non-congestion state and has a surplus transmission capacity, XR service transmission rates of some users may be increased, and the first rate adjustment request may be transmitted to the terminal in this case.

The first rate adjustment request includes at least one of the following:
a target data rate or an acceptable highest rate of the video service data;
a quantity of picture frames per second;
an expected adjustment amount of a transmission rate of the video service data; or
a reason for triggering the first rate adjustment request.

In an embodiment of this application, before the network side device transmits the first rate adjustment request to the terminal, the method further includes the following step:
the network side device receives first information transmitted by the terminal. The first information indicates information about a rate at which the terminal transmits the video service data. The first information includes at least one of the following:
(1) an adjustment range of the rate at which the terminal transmits the video service data;
(2) step rate information supported by transmission of the video service data by the terminal, the step rate information including a plurality of rates; or
(3) a preferred rate at which the terminal transmits the video service data, where the terminal may report a rate threshold, a rate that reaches or exceeds the rate threshold is the preferred rate.

Specifically, the terminal transmits the first information to the network side device for the network side device to select when there is a requirement for rate adjustment, for example, when the network side device transmits the first rate adjustment request to the terminal.

For example, the step rate information includes a plurality of rates. The plurality of rates may be rates [DRO, DR1, ..., DRd, ..., and DRN-1] sorted in ascending order. DR0 and DRN-1 are respectively acceptable lowest rate and highest rate, and DRd is an expected rate (which may alternatively be referred to as an intentional rate).

The network side device selects a rate from the rate information when generating the first rate adjustment request after receiving the step rate information of the terminal, and notifies the terminal in the first rate adjustment request, for example, indicating a serial number of a selected step rate in the first rate adjustment request.

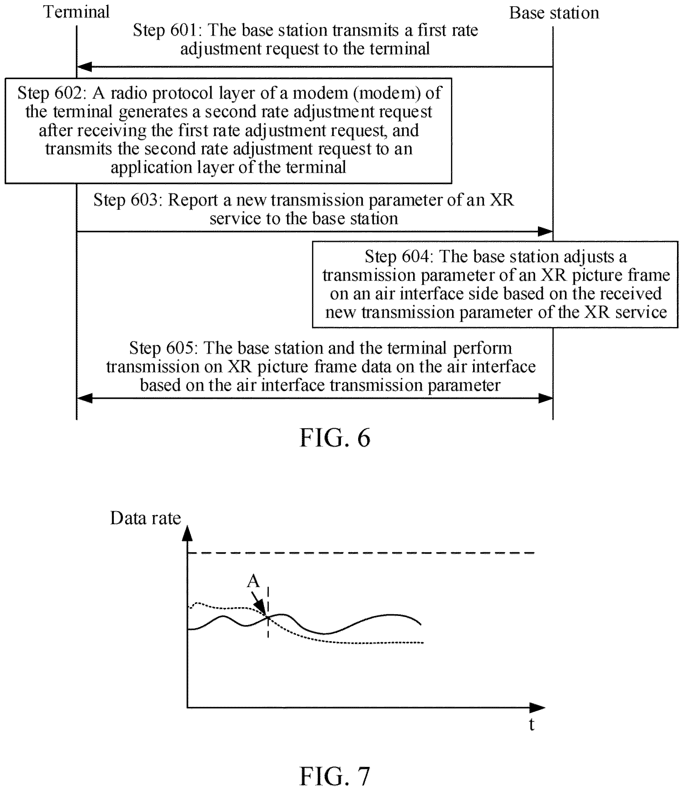

The information transmission method provided in this application is described below by taking a base station as an example. FIG. 6 shows a flowchart of information interaction between a terminal and a base station.

Step 601: The base station transmits a first rate adjustment request to the terminal. Specifically, the base station may transmit the first rate adjustment request to the terminal under the following conditions:
(1) when congestion occurs, XR service data rates of part users need to be decreased, so that the base station can continue provide a service of an XR service for these users effectively; or
(2) a system is in a non-congestion state and has a remaining transmission capacity, XR service transmission rates of some users may be increased, and the first rate adjustment request may be transmitted to the terminal in this case.

Step 602: A radio protocol layer of a modem (modem) of the terminal generates a second rate adjustment request after receiving the first rate adjustment request, and transmits the second rate adjustment request to an application layer of the terminal.

Step 603: The application layer of the terminal determines a new transmission parameter (that is, transmission parameter information) of an XR service according to the second rate adjustment request received from the radio protocol layer of the modem, transmits the transmission parameter to the radio protocol layer of the modem, and feeds back the new transmission parameter of the XR service to the base station through the radio protocol layer of the modem.

Step 604: The base station adjusts a transmission parameter of an XR picture frame on an air interface, including a time-frequency resource configuration and a transmission delay configuration, based on the received new transmission parameter of the XR service, and obtains an air interface transmission parameter.

Step 605: The base station and the terminal perform transmission on XR picture frame data on the air interface based on the air interface transmission parameter.

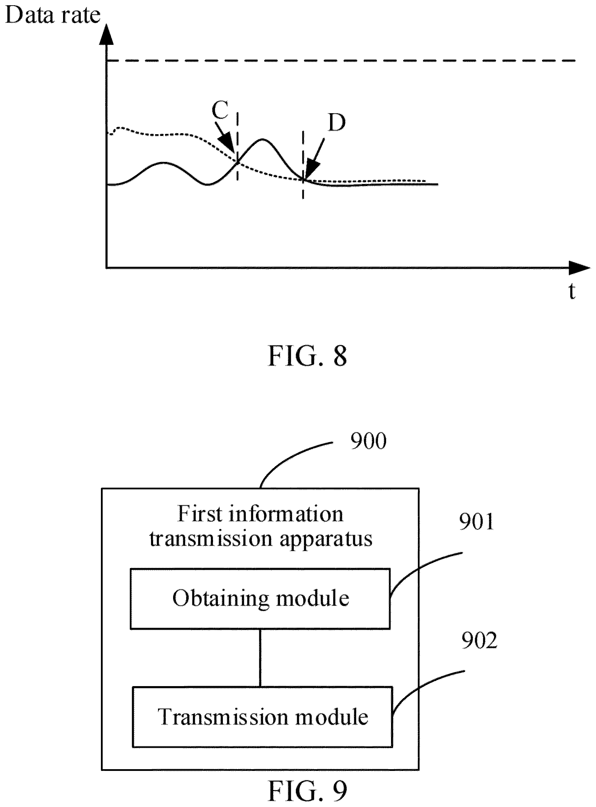

FIG. 7 shows a schematic diagram of congestion of a cell. Network congestion occurs at a position indicated by A in FIG. 7. FIG. 8 is a schematic diagram of network transmission after an air interface transmission parameter is adjusted by a method provided by this application.

In FIG. 7 and FIG. 8, curves drawn by solid lines represent a total rate demand of XR services of a plurality of terminals, and curves drawn by dashed lines represent cell capacity or throughput. In FIG. 7, at the beginning, the throughput provided by the cell can satisfy an XR service data transmission demand of existing XR users, but the capacity or the throughput provided by the cell cannot satisfy the XR service data transmission demand in the cell due to factors such as interference changes, user mobility, changes of XR service volume, and changes of other service volumes of the cell. Network congestion occurs at a position indicated by C in FIG. 8, and network congestion is relieved at a position indicated by D.

It can be seen from FIG. 7 and FIG. 8 that the network congestion of the cell is relieved after the air interface transmission parameter is adjusted by the method provided by this application.

Specifically, when network congestion occurs or network congestion is relieved, a base station transmits a first rate adjustment request to a terminal. After receiving the request, the terminal performs interaction with an application layer of the XR service (called an XR service application layer for short hereinafter) based on the request and requests the application layer to adjust a rate of the XR service to a rate that can be provided by the cell. After completing XR service data rate adjustment, the application layer feeds back a new XR service data feature parameter (for example, a frame frequency, a size (size) of a GoP, a frame template of the GoP, a time of arrival of a frame, and an average data rate) to a radio protocol layer (that is, a modem) of the terminal. The radio protocol layer of the terminal transmits the new XR service data feature parameter to the base station. An adjustment request for the XR service data rate includes a video rate decrease request in a case that the network congestion occurs, or a video rate increase request in a case that the network congestion is relieved.

The information transmission method provided in this application can provide a flexible congestion processing method, and improve the satisfaction of XR service users.

The information transmission method provided by FIG. 3 of this application may be performed by performed by a first information transmission apparatus 900. In the embodiments of this application, an apparatus for the information transmission method provided in embodiments of this application is described by taking an example in which the first information transmission apparatus 900 performs the information transmission method. As shown in FIG. 9, the embodiments of this application provide a first information transmission apparatus 900, including:
an obtaining module 901, configured to obtain transmission parameter information, where the transmission parameter information is used to determine an air interface transmission parameter of video service data; and
a transmission module 902, configured to transmit the transmission parameter information to a network side device.

Further, the transmission module 902 is further configured to receive a first rate adjustment request transmitted by the network side device. The first rate adjustment request is used to request a terminal to adjust the transmission parameter of the video service data.

The obtaining module 901 is configured to obtain the transmission parameter information based on the first rate adjustment request.

Further, the first rate adjustment request is a rate adjustment request received by a modem of the terminal.

The obtaining module 901 includes a generation submodule, a transmitting submodule, and a determination submodule. The generation submodule is configured to generate a second rate adjustment request according to the first rate adjustment request through the modem of the terminal.

The transmitting submodule is configured to transmit the second rate adjustment request to an application layer of the terminal through the modem.

The determination submodule is configured to determine the transmission parameter information based on the second rate adjustment request through the application layer.

Further, the terminal further includes an adaptation layer located between the application layer and the modem. The adaptation layer is configured to convert the second rate adjustment request transmitted by the modem into a format that can be parsed by the application layer, and/or, convert the transmission parameter information transmitted by the application layer into a format that can be parsed by the modem.

Further, the transmission module 902 is further configured to transmit first information. The first information indicates information about a rate at which the terminal transmits the video service data.

Further, the first information includes at least one of the following:
an adjustment range of the rate at which the terminal transmits the video service data;
step rate information supported by transmission of the video service data by the terminal, the step rate information including a plurality of rates; or
a preferred rate at which the terminal transmits the video service data.

Further, the transmission parameter information includes at least one of the following:
a transmission rate of the video service data;
a quantity of picture frames per second in the video service data;
a quantity of picture frames in a group of picture GoP;
time and location information of occurrence of an I frame, a predicted picture P frame, and a bidirectional predicted picture B frame in each intra-coded picture I frame period;
a data volume range of the I frame;
a data volume range of the P frame; or
a data volume range of the B frame.
Further, the first rate adjustment request includes at least one of the following:
a target data rate or an acceptable highest rate of the video service data;
a quantity of picture frames per second;
an expected adjustment amount of a transmission rate of the video service data; or
a reason for triggering the first rate adjustment request.

Further, the first rate adjustment request includes at least one of the following:
a video rate decrease request in a case that network congestion occurs; or
a video rate increase request in a case that network congestion is relieved.

Further, the second rate adjustment request includes at least one of the following:
a target data rate or an acceptable highest rate of the video service data;
a quantity of picture frames per second;
an expected adjustment amount of a transmission rate of the video service data; or
a reason for triggering the second rate adjustment request.

Further, the second rate adjustment request includes at least one of the following:
a video rate decrease request in a case that network congestion occurs; or
a video rate increase request in a case that network congestion is relieved.

Further, in a case that the terminal is a video service data receiving end, the transmission parameter information is obtained by the terminal from a video service data transmitting end; or
in a case that the terminal is a video service data transmitting end, the transmission parameter information is determined by the terminal.

Further, the transmission module 902 is further configured to transmit a third rate adjustment request to the video service data transmitting end. The third rate adjustment request is used to request to adjust a transmission parameter of the video service data.

Further, the third rate adjustment request includes at least one of the following:
a target data rate or an acceptable highest rate of the video service data;
a quantity of picture frames per second;
an expected adjustment amount of a transmission rate of the video service data; or
a reason for triggering the third rate adjustment request.

Further, the third rate adjustment request includes at least one of the following:
a video rate decrease request in a case that network congestion occurs; or
a video rate increase request in a case that network congestion is relieved.

The first information transmission apparatus 900 in the embodiments of this application may be an electronic device, for example, the electronic device with an operating system, or a part in the electronic device, for example, an integrated circuit or a chip. The electronic device may be a terminal, or another device other than the terminal. For example, the terminal may include, but is not limited to, types of terminals 11 listed above, and the another device may be a server, a network attached storage (Network Attached Storage, NAS), or the like. There is no limitation in the embodiments of this application.

The first information transmission apparatus 900 provided in embodiments of this application can implement various processes implemented by the method embodiment in FIG. 3, and achieve the same technical effects. To avoid repetition, details are not described herein again.

The information transmission method provided by FIG. 5 of this application may be performed by a second information transmission apparatus. In the embodiments of this application, an apparatus for the information transmission method provided in embodiments of this application is described by taking an example in which the second information transmission apparatus performs the information transmission method.

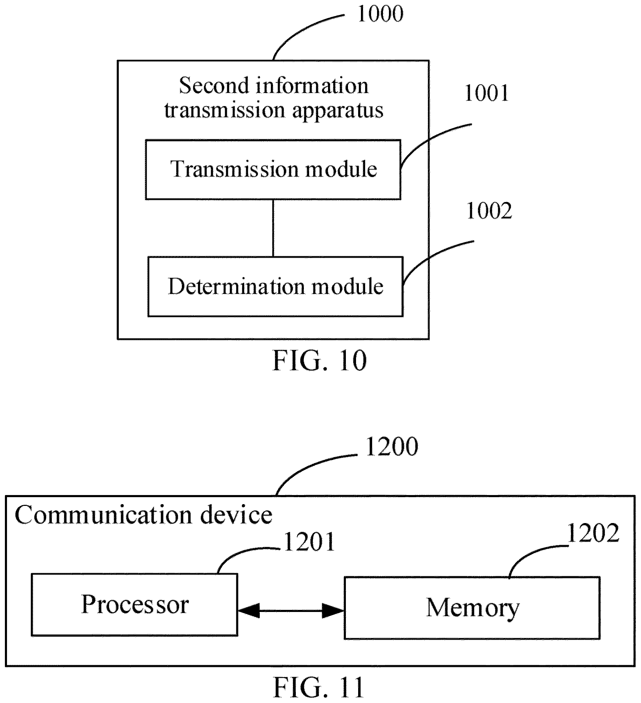

As shown in FIG. 10, the embodiments of this application provide a second information transmission apparatus 1000, including:
a transmission module 1001, configured to receive transmission parameter information transmitted by a terminal, where the transmission parameter information is used to determine an air interface transmission parameter of video service data; and
a determination module 1002, configured to determine the air interface transmission parameter according to the transmission parameter information.

The transmission module 1001 is further configured to transmit the video service data based on the air interface transmission parameter.

Further, the transmission module 1001 is further configured to transmit a first rate adjustment request to the terminal. The first rate adjustment request is used to request the terminal to adjust a transmission parameter of the video service data.

Further, the transmission module 1001 is further configured to receive first information transmitted by the terminal. The first information indicates information about a rate at which the terminal transmits the video service data.

Further, the first information includes at least one of the following:
an adjustment range of the rate at which the terminal transmits the video service data;
step rate information supported by transmission of the video service data by the terminal, the step rate information including a plurality of rates; or
a preferred rate at which the terminal transmits the video service data.

Further, the transmission parameter information includes at least one of the following:
a transmission rate of the video service data;
a quantity of picture frames per second in the video service data;
a quantity of picture frames in a group of picture GoP;
time and location information of occurrence of an I frame, a predicted picture P frame, and a bidirectional predicted picture B frame in each intra-coded picture Iframe period;
a data volume range of the I frame;
a data volume range of the P frame; or
a data volume range of the B frame.

Further, the first rate adjustment request includes at least one of the following:
a target data rate or an acceptable highest rate of the video service data;
a quantity of picture frames per second;
an expected adjustment amount of a transmission rate of the video service data; or
a reason for triggering the first rate adjustment request.

Further, the first rate adjustment request includes at least one of the following:
a video rate decrease request in a case that network congestion occurs; or
a video rate increase request in a case that network congestion is relieved.

The second information transmission apparatus 1000 provided in embodiments of this application can implement various processes implemented by the method embodiment in FIG. 5, and achieve the same technical effects. To avoid repetition, details are not described herein again.

Optionally, as shown in FIG. 11, the embodiments of this application further provide a communication device 1200, including a processor 1201 and a memory 1202. The memory 1202 stores a program or instructions executable by the processor 1201. For example, when the communication device 1200 is a terminal, the program or the instructions implement various steps of the above-mentioned information transmission method embodiment shown in FIG. 3 when executed by the processor 1201, and achieve the same technical effects. When the communication device 1200 is a network side device, the program or the instructions implement various steps of the above-mentioned information transmission method embodiment shown in FIG. 5 when executed by the processor 1201, and can achieve the same technical effects. To avoid repetition, details are not described herein again.

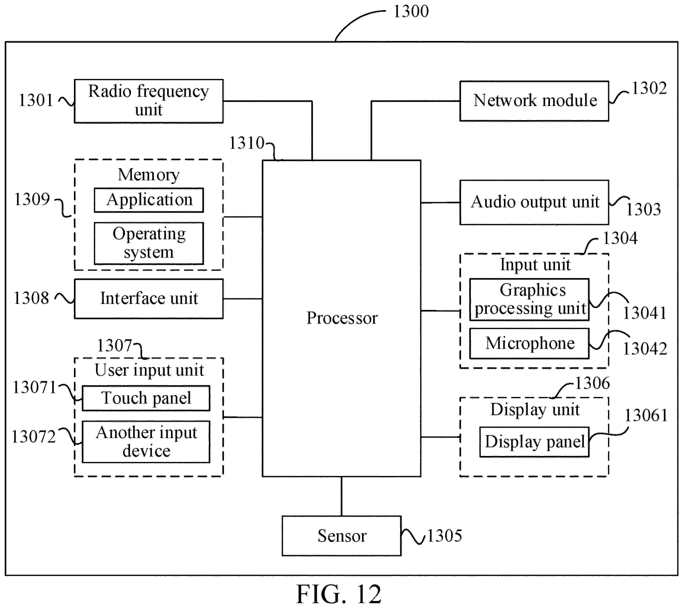

Embodiments of this application further provide a terminal, including a processor and a communication interface. The processor or the communication interface is configured to obtain transmission parameter information. The transmission parameter information is used to determine an air interface transmission parameter of video service data. The communication interface is further configured to transmit the transmission parameter information to a network side device. This terminal embodiment corresponds to the above-mentioned terminal side method embodiment. Various implementation processes and implementations of the above-mentioned method embodiment are applicable to the terminal embodiment, and can achieve the same technical effects. Specifically, FIG. 12 is a schematic diagram of a hardware structure for implementing a terminal according to an embodiment of this application.

The terminal 1300 includes, but is not limited to: at least part components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

Those skilled in the art may understand that the terminal 1300 may further include a power supply (for example, a battery) for supplying power to various components. The power supply may be logically connected to the processor 1310 through a power management system, thereby realizing functions such as charging management, discharging management, and power consumption management through the power management system. A terminal structure shown in FIG. 12 does not constitute a limitation to the terminal. The terminal may include more or fewer components than those shown in the figure, or combine some components, or have different component arrangements. Details are not described herein again.

It is to be understood that, in embodiments of this application, the input unit 1304 may include a graphics processing unit (Graphics Processing Unit, GPU) 13041 and a microphone 13042. The graphics processing unit 13041 performs processing on picture data of a static picture or a video obtained by a picture capture apparatus (for example, a camera) in a video capture mode or a picture capture mode. The display unit 1306 may include a display panel 13061. The display panel 13061 may be configured in the form of a liquid crystal display, an organic light-emitting diode, or the like. The user input unit 1307 includes at least one of a touch panel 13071 and another input device 13072. The touch panel 13071 is also referred to as a touchscreen. The touch panel 13071 may include two parts: a touch detection apparatus and a touch controller. The another input device 13072 may include, but is not limited to, a physical keyboard, a functional key (such as a volume control key or a switch key), a track ball, a mouse, and a joystick. Details are not described herein again.

In embodiments of this application, after receiving downlink data from a network side device, the radio frequency unit 1301 may transmit the downlink data to the processor 1310 for processing. In addition, the radio frequency unit 1301 may transmit uplink data to the network side device. Generally, the radio frequency unit 1301 includes, but is not limited to, an antenna, an amplifier, a transceiver, a coupler, a low noise amplifier, a duplexer, and the like.

The memory 1309 may be configured to store a software program or instructions and various types of data. The memory 1309 may mainly include a first storage area storing a program or instructions and a second storage area storing data. The first storage area may store an operating system, an application or instructions required by at least one function (for example, a sound playback function and a picture display function), and the like. In addition, the memory 1309 may include a volatile memory or a non-volatile memory, or the memory 1309 may include both a volatile memory and a non-volatile memory. The non-volatile memory may be a read-only memory (Read-Only Memory, ROM), a programmable read-only memory (Programmable ROM, PROM), an erasable programmable read-only memory (EPROM), an electrically erasable programmable read-only memory (Erasable PROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DR RAM). The memory 1309 in embodiments of this application includes, but is not limited to, these and any other suitable types of memories.

The processor 1310 may include one or more processing units. Optionally, the processor 1310 integrates an application processor and a modulation and demodulation processor. The application processor mainly processes operations related to an operating system, a user interface, an application program, and the like. The modulation and demodulation processor mainly processes a wireless communication signal, for example, a baseband processor. It may be understood that, the above-mentioned modulation and demodulation processor may alternatively not be integrated into the processor 1310.

The radio frequency unit 1301 is configured for a terminal to obtain transmission parameter information. The transmission parameter information is used to determine an air interface transmission parameter of video service data. The terminal transmits the transmission parameter information to the network side device.

Further, the radio frequency unit 1301 is further configured to receive a first rate adjustment request transmitted by the network side device. The first rate adjustment request is used to request the terminal to adjust a transmission parameter of the video service data.

The processor 1310 is configured to obtain the transmission parameter information based on the first rate adjustment request.

Further, the first rate adjustment request is a rate adjustment request received by a modem of the terminal.

The processor 1310 generates a second rate adjustment request according to the first rate adjustment request through the modem of the terminal. The second rate adjustment request is transmitted to an application layer through the modem. The application layer determines the transmission parameter information based on the second rate adjustment request.

Further, the terminal further includes an adaptation layer located between the application layer and the modem. The adaptation layer is configured to convert the second rate adjustment request transmitted by the modem into a format that can be parsed by the application layer, and/or, convert the transmission parameter information transmitted by the application layer into a format that can be parsed by the modem.

Further, the radio frequency unit 1301 is further configured to transmit first information. The first information indicates information about a rate at which the terminal transmits the video service data.

Further, the first information includes at least one of the following:
an adjustment range of the rate at which the terminal transmits the video service data;
step rate information supported by transmission of the video service data by the terminal, the step rate information including a plurality of rates; or
a preferred rate at which the terminal transmits the video service data.

Further, the transmission parameter information includes at least one of the following:
a transmission rate of the video service data;
a quantity of picture frames per second in the video service data;
a quantity of picture frames in a group of picture GoP;
time and location information of occurrence of an I frame, a predicted picture P frame, and a bidirectional predicted picture B frame in each intra-coded picture I frame period;
a data volume range of the I frame;
a data volume range of the P frame; or
a data volume range of the B frame.

Further, the first rate adjustment request includes at least one of the following:
a target data rate or an acceptable highest rate of the video service data;
a quantity of picture frames per second;
an expected adjustment amount of a transmission rate of the video service data; or
a reason for triggering the first rate adjustment request.

Further, the first rate adjustment request includes at least one of the following:
a video rate decrease request in a case that network congestion occurs; or
a video rate increase request in a case that network congestion is relieved.

Further, the second rate adjustment request includes at least one of the following:
a target data rate or an acceptable highest rate of the video service data;
a quantity of picture frames per second;
an expected adjustment amount of a transmission rate of the video service data; or
a reason for triggering the second rate adjustment request.

Further, the second rate adjustment request includes at least one of the following:
a video rate decrease request in a case that network congestion occurs; or
a video rate increase request in a case that network congestion is relieved.

Further, in a case that the terminal is a video service data receiving end, the transmission parameter information is obtained by the terminal from a video service data transmitting end; or
in a case that the terminal is a video service data transmitting end, the transmission parameter information is determined by the terminal.

Further, the radio frequency unit 1301 is further configured to transmit a third rate adjustment request to the video service data transmitting end in a case that the terminal is the video service data receiving end. The third rate adjustment request is used to request to adjust a transmission parameter of the video service data.

Further, the third rate adjustment request includes at least one of the following:
a target data rate or an acceptable highest rate of the video service data;
a quantity of picture frames per second;
an expected adjustment amount of a transmission rate of the video service data; or
a reason for triggering the third rate adjustment request.

Further, the third rate adjustment request includes at least one of the following:
a video rate decrease request in a case that network congestion occurs; or
a video rate increase request in a case that network congestion is relieved.

The terminal provided in embodiments of this application can implement various processes implemented by the method embodiment of FIG. 3, and can achieve the same technical effects. To avoid repetition, details are not described herein again.

Embodiments of this application further provide a network side device, including a processor and a communication interface. The communication interface is configured to: receive transmission parameter information transmitted by a terminal, where the transmission parameter information is used to determine an air interface transmission parameter of video service data; and transmit the video service data based on the air interface transmission parameter. The processor is configured to determine the air interface transmission parameter according to the transmission parameter information.

This network side device embodiment corresponds to the above-mentioned network side device method embodiment shown in FIG. 5. Various implementation processes and implementations of the above-mentioned method embodiment shown in FIG. 5 are applicable to the network side device embodiment, and can achieve the same technical effects.

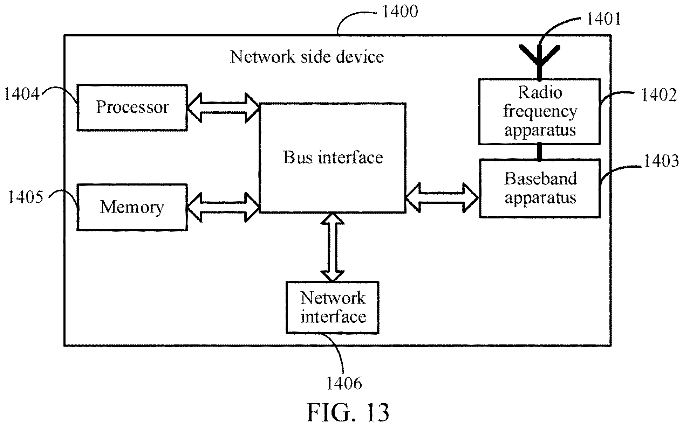

Specifically, embodiments of this application further provide a network side device. As shown in FIG. 13, a network side device 1400 includes: an antenna 1401, a radio frequency apparatus 1402, a baseband apparatus 1403, a processor 1404, and a memory 1405. The antenna 1401 is connected to the radio frequency apparatus 1402. In an uplink direction, the radio frequency apparatus 1402 receives information through the antenna 1401, and transmits the received information to the baseband apparatus 1403 for processing. In a downlink direction, the baseband apparatus 1403 performs processing on information to be transmitted, and transmits processed information to the radio frequency apparatus 1402. The radio frequency apparatus 1402 performs processing on the received information and transmits the processed information through the antenna 1401.

The method performed by the network side device in the above embodiments may be implemented in the baseband apparatus 1403. The baseband apparatus 1403 includes a baseband processor.

For example, the baseband apparatus 1403 may include at least one baseband board. A plurality of chips are arranged on the baseband board, as shown in FIG. 13, for example, one of the chips is a baseband processor and is connected to the memory 1405 through a bus interface to call a program in the memory 1405 to perform operations of the network side device shown in the above method embodiments.

The network side device may further include a network interface 1406. For example, the network interface is a common public radio interface (common public radio interface, CPRI).

Specifically, the network side device 1400 according to an embodiment of this application further includes: instructions or a program stored on the memory 1405 and executable by the processor 1404. The processor 1404 calls the instructions or the program in the memory 1405 to perform the method performed by various modules shown in FIG. 10, and achieves the same technical effects. To avoid repetition, details are not described herein again.

Embodiments of this application further provide a readable storage medium. The readable storage medium stores a program or instructions. The program or the instructions implement various processes of the above-mentioned information transmission method embodiment when executed by a processor, and can achieve the same technical effects. To avoid repetition, details are not described herein again.

The processor is a processor in the terminal in the above-mentioned embodiments. The readable storage medium includes a computer-readable storage medium such as a computer but is not limited to, various media capable of storing a program code such as a computer Read-Only Memory ROM, a Random Access Memory RAM, a magnetic disc, or a compact disc.

Embodiments of this application further provide a chip. The chip includes a processor and a communication interface. The communication interface is coupled to the processor. The processor is configured to run a program or instructions to implement various processes of the above-mentioned information transmission method, and can achieve the same technical effects. To avoid repetition, details are not described herein again.

It is to be understood that the chip mentioned in this embodiment of this application may alternatively be referred to as a system-level chip, a system chip, a chip system, a system on chip, or the like.

Embodiments of this application further provide a computer program product. The computer program product is stored in a storage medium. The computer program product is executed by at least one processor to implement various processes of the above-mentioned information transmission method, and can achieve the same technical effects. To avoid repetition, details are not described herein again.

Embodiments of this application further provide a communication system, including: a terminal and a network side device. The terminal may be configured to perform steps of the above-mentioned method embodiment shown in FIG. 3. The network side device may be configured to perform steps of the method embodiment shown in FIG. 5.

It is to be noted that, terms "include", "comprise", or any other variations thereof herein are intended to cover non-exclusive inclusions, so that a process, a method, an article, or an apparatus including a series of elements not only includes those elements but also includes other elements which are not clearly listed or further includes intrinsic elements of the process, the method, the article, or the apparatus. Without more limitations, elements defined by the sentence "including one" does not exclude that there are other same elements in the process, the method, the article, or the apparatus. In addition, it is to be noted that scopes of the methods and apparatuses in implementations of this application are not limited to performing functions in an order shown or discussed, or may include performing the functions in a substantially simultaneous manner or in a reverse order according to the functions involved. For example, the described methods may be implemented in an order different from that described, and various steps may be added, omitted, or combined. In addition, features described with reference to some examples may also be combined in other examples.

Through description of the above implementations, those skilled in the art may clearly learn that the methods according to the above-mentioned embodiments may be implemented by software and a necessary universal hardware platform, or may certainly be implemented by hardware. However, the former is a better implementation in many cases. Based on such an understanding, the technical solutions of this application essentially, or the part contributing to the conventional technology may be embodied in the form of a computer software product. The computer software product is stored in a storage medium (for example, a ROM/RAM, a magnetic disc, or a compact disc) including several instructions to enable a terminal device (which may be a mobile phone, a computer, a server, an air conditioner, a network side device, or the like) to perform the methods described in various embodiments of this application.

Embodiments of this application have been described above with reference to the accompanying drawings. However, this application is not limited to the above-mentioned specific implementations. The above-mentioned specific embodiments are merely examples rather than limitations. Those of ordinary skill in the art may make many variations under the teaching of this application without departing from the spirit of this application, and such variations all fall within the scope of protection of this application.

## Claims

1. An information transmission method, comprising:
obtaining, by a terminal, transmission parameter information, where the transmission parameter information is used to determine an air interface transmission parameter of video service data; and
transmitting, by the terminal, the transmission parameter information to a network side device.

2. The method according to claim 1, wherein before the obtaining, by a terminal, transmission parameter information, the method further comprises:
receiving, by the terminal, a first rate adjustment request transmitted by the network side device, wherein the first rate adjustment request is used to request the terminal to adjust a transmission parameter of the video service data; and
the obtaining, by a terminal, transmission parameter information comprises:
obtaining, by the terminal, the transmission parameter information based on the first rate adjustment request.

3. The method according to claim 2, wherein the first rate adjustment request is a rate adjustment request received by a modem of the terminal; and
the obtaining, by a terminal, transmission parameter information comprises:
generating, by the terminal, a second rate adjustment request according to the first rate adjustment request through the modem of the terminal;
transmitting, by the terminal, the second rate adjustment request to an application layer of the terminal through the modem; and
determining, by the terminal, the transmission parameter information based on the second rate adjustment request through the application layer.

4. The method according to claim 3, wherein the terminal further comprises an adaptation layer located between the application layer and the modem; the adaptation layer is configured to convert the second rate adjustment request transmitted by the modem into a format that can be parsed by the application layer, and/or, convert the transmission parameter information transmitted by the application layer into a format that can be parsed by the modem.

5. The method according to claim 2, wherein before the receiving, by the terminal, a first rate adjustment request transmitted by the network side device, the method further comprises:
transmitting, by the terminal, first information, wherein the first information indicates information about a rate at which the terminal transmits the video service data.

6. The method according to claim 5, wherein the first information comprises at least one of the following:
an adjustment range of the rate at which the terminal transmits the video service data;
step rate information supported by transmission of the video service data by the terminal, the step rate information comprising a plurality of rates; or
a preferred rate at which the terminal transmits the video service data.

7. The method according to any one of claims 1 to 6, wherein the transmission parameter information comprises at least one of the following:
a transmission rate of the video service data;
a quantity of picture frames per second in the video service data;
a quantity of picture frames in a group of picture GoP;
time and location information of occurrence of an I frame, a predicted picture P frame, and a bidirectional predicted picture B frame in each intra-coded picture I frame period;
a data volume range of the I frame;
a data volume range of the P frame; or
a data volume range of the B frame.

8. The method according to claim 2 or 3, wherein the first rate adjustment request or the second rate adjustment request comprises at least one of the following:
a target data rate or an acceptable highest rate of the video service data;
a quantity of picture frames per second;
an expected adjustment amount of a transmission rate of the video service data; or
a reason for triggering the first rate adjustment request or the second rate adjustment request.

9. The method according to claim 2 or 3, wherein the first rate adjustment request or the second rate adjustment request comprises at least one of the following:
a video rate decrease request; or
a video rate increase request.

10. The method according to claim 1, wherein in a case that the terminal is a video service data receiving end, the transmission parameter information is obtained by the terminal from a video service data transmitting end; or
in a case that the terminal is a video service data transmitting end, the transmission parameter information is determined by the terminal.

11. The method according to claim 10, wherein the terminal is the video service data receiving end, and before the obtaining, by a terminal, transmission parameter information, the method further comprises:
transmitting, by the terminal, a third rate adjustment request to the video service data transmitting end, wherein the third rate adjustment request is used to request to adjust a transmission parameter of the video service data.

12. The method according to claim 11, wherein the third rate adjustment request comprises at least one of the following:
a target data rate or an acceptable highest rate of the video service data;
a quantity of picture frames per second;
an expected adjustment amount of a transmission rate of the video service data; or
a reason for triggering the third rate adjustment request.

13. The method according to claim 12, wherein the third rate adjustment request comprises at least one of the following:
a video rate decrease request; or
a video rate increase request.

14. An information transmission method, comprising:
receiving, by a network side device, transmission parameter information transmitted by a terminal, wherein the transmission parameter information is used to determine an air interface transmission parameter of video service data;
determining, by the network side device, the air interface transmission parameter according to the transmission parameter information; and
transmitting, by the network side device, the video service data based on the air interface transmission parameter.

15. The method according to claim 14, wherein before the receiving, by a network side device, transmission parameter information transmitted by a terminal, the method further comprises:
transmitting, by the network side device, a first rate adjustment request to the terminal, wherein the first rate adjustment request is used to request the terminal to adjust a transmission parameter of the video service data.

16. The method according to claim 15, wherein before the transmitting, by the network side device, a first rate adjustment request to the terminal, the method further comprises:
receiving, by the network side device, first information transmitted by the terminal, wherein the first information indicates information about a rate at which the terminal transmits the video service data.

17. The method according to claim 16, wherein the first information comprises at least one of the following:
an adjustment range of the rate at which the terminal transmits the video service data;
step rate information supported by transmission of the video service data by the terminal, the step rate information comprising a plurality of rates; or
a preferred rate at which the terminal transmits the video service data.

18. The method according to claim 14, wherein the transmission parameter information comprises at least one of the following:
a transmission rate of the video service data;
a quantity of picture frames per second in the video service data;
a quantity of picture frames in a group of picture GoP;
time and location information of occurrence of an I frame, a predicted picture P frame, and a bidirectional predicted picture B frame in each intra-coded picture I frame period;
a data volume range of the I frame;
a data volume range of the P frame; or
a data volume range of the B frame.

19. The method according to claim 15 or 16, wherein the first rate adjustment request comprises at least one of the following:
a target data rate or an acceptable highest rate of the video service data;
a quantity of picture frames per second;
an expected adjustment amount of a transmission rate of the video service data; or
a reason for triggering the first rate adjustment request.

20. The method according to claim 15 or 16, wherein the first rate adjustment request comprises at least one of the following:
a video rate decrease request; or
a video rate increase request.

21. An information transmission apparatus, comprising:
an obtaining module, configured to obtain transmission parameter information, where the transmission parameter information is used to determine an air interface transmission parameter of video service data; and
a transmission module, configured to transmit the transmission parameter information to a network side device.

22. The apparatus according to claim 21, wherein:
the transmission module is further configured to receive a first rate adjustment request transmitted by the network side device, wherein the first rate adjustment request is used to request a terminal to adjust a transmission parameter of the video service data; and
the obtaining module is configured to obtain the transmission parameter information based on the first rate adjustment request.

23. An information transmission apparatus, comprising:
a transmission module, configured to receive transmission parameter information transmitted by a terminal, wherein the transmission parameter information is used to determine an air interface transmission parameter of video service data; and
a determination module, configured to determine the air interface transmission parameter according to the transmission parameter information, wherein
the transmission module is further configured to transmit the video service data based on the air interface transmission parameter.

24. The apparatus according to claim 23, wherein the transmission module is further configured to transmit a first rate adjustment request to the terminal, wherein the first rate adjustment request is used to request the terminal to adjust a transmission parameter of the video service data.

25. A terminal, comprising a processor and a memory, the memory storing a program or instructions executable by the processor, wherein the program or the instructions implement steps of the information transmission method according to any one of claims 1 to 13 when executed by the processor.

26. A network side device, comprising a processor and a memory, the memory storing a program or instructions executable by the processor, wherein the program or the instructions implement steps of the information transmission method according to any one of claims 14 to 20 when executed by the processor.

27. A readable storage medium, the readable storage medium storing a program or instructions, where the program or the instructions implement the information transmission method according to any one of claims 1 to 13 when executed by a processor, or implement steps of the information transmission method according to any one of claims 14 to 20.
